# EUROPÄISCHE PATENTSCHRIFT

(11) **EP 3 359 754 B1**
(45) Veröffentlichungstag und Bekanntmachung des Hinweises auf die Patenterteilung: **11.09.2019**
(21) Anmeldenummer: 16805334.6
(22) Anmeldetag: 21.11.2016
(51) Int. Cl.: E04B 1/61, E04B 2/08

(54) **BAUELEMENT UND HERSTELLUNGSVERFAHREN**
COMPONENT AND PRODUCTION METHOD
ÉLÉMENT DE CONSTRUCTION ET PROCÉDÉ DE FABRICATION

(30) Priorität: 26.11.2015 AT 34815 U
(43) Veröffentlichungstag der Anmeldung: 15.08.2018
(73) Patentinhaber: Schilcher, Josef, 9833 Rangersdorf (AT)
(72) Erfinder: Schilcher, Josef, 9833 Rangersdorf (AT)
(74) Vertreter: Beer & Partner Patentanwälte KG
(86) Internationale Anmeldenummer: PCT/EP2016/078337
(87) Internationale Veröffentlichungsnummer: WO 2017/089309

(56) Entgegenhaltungen:
- EP-A1- 0 886 016
- EP-B1- 2 264 323
- WO-A1-2014/153574
- AT-B1- 505 737
- DE-U1- 9 312 052
- FR-A- 1 518 263
- FR-A- 1 570 606
- US-A- 1 985 992

## Beschreibung

Die Erfindung betrifft ein Bauelement mit den Merkmalen des einleitenden Teils von Anspruch 1.

Die Erfindung betrifft weiters ein Verfahren zum Herstellen eines erfindungsgemäßen Bauelementes.

Bauelemente der eingangs genannten Gattung sind in verschiedenen Ausführungsformen bekannt.

EP 0 886 016 A1, von welcher die Erfindung ausgeht, beschreibt ein Verbindungselement für plattenförmige Teile, wobei Verbindungselemente in nach außen offene Ausnehmungen der plattenförmigen Teile, die im Wesentlichen quer zur Flächenerstreckung der plattenförmigen Teile ausgerichtet sind, eingesetzt sind.

Die aus EP 0 886 016 A1 bekannten Verbindungselemente sind einstückig ausgebildet und umfassen zwei im Querschnitt etwa trapezförmige Bereiche, die mit ihren kürzeren Seiten aneinander grenzen.

Somit erfolgt bei EP 0 886 016 A1 die Verbindung mit Hilfe eines Kupplungsstabes, der einen schwalbenschwanzförmigen Querschnitt aufweist. Auch der einstückige, also nicht geteilte, Kupplungsstab von EP 0 886 016 A1 erlaubt es nur, bereits dicht aneinander anliegende Platten miteinander zu verbinden.

Verwiesen wird weiters auf FR 1.570.606 A, AT 12 597 U1 und EP 2 264 323 B1. Aus diesen Schriften sind Bauelemente bekannt, in welchen die Verbindungsmittel zwei einander gegenüberliegende, sich verbreiternde Rippen aufweisen, die in längslaufende, hinterschnitten ausgebildete Nuten in den aneinander anliegenden Schmalflächen der Bauteile eingesetzt sind.

Ähnliche Bauteile sind aus AT 505 737 B1 und WO 2014/153574 A1 bekannt. Um das Zusammenbauen und Zusammenspannen der stumpf aneinanderstoßenden Bauteile zu dem Bauelement zu vereinfachen, sind die Verbindungselemente in zwei entlang einer Keilfläche gegeneinander in Längsrichtung verschiebbare Teile geteilt.

WO 2014/153574 A1 offenbart ein Bauelement, das aus zwei Platten besteht, die über eine Kupplungsleiste miteinander verbunden sind. Die Kupplungsleiste von WO 2014/153574 A1 besteht aus zwei keilförmigen Teilen, die mit ihren Keilflächen aneinander gelegt sind. Allerdings sind die Kupplungsleisten von WO 2014/153574 A1 nicht quer zur Flächenerstreckung der miteinander verbundenen Platten des Bauelementes ausgerichtet.

US 1,985,992 A zeigt und beschreibt Verbindungselemente, die, ähnlich wie die Verbindungselemente von EP 0 886 016 A1, aus zwei untrennbar miteinander verbundenen Bereichen mit im Wesentlichen trapezförmigem Querschnitt bestehen. Die einstückigen Kupplungsleisten von US 1,985,992 A sind, ähnlich wie die Kupplungsleisten von WO 2014/153574 A1, parallel zur Ebene der miteinander verbundenen Teile, und nicht quer zur Ebene, ausgerichtet.

EP 2 264 323 B1 zeigt eine Verbindung von leistenförmigen Bauteilen zu Bauelementen, welche, bis auf den Umstand, dass die Verbindungselemente jeweils einstückig ausgebildet sind, der Offenbarung von US 1,985,992 A und FR 1 570 606 A entspricht.

FR 1 518 263 A offenbart Verbindungselemente aus keilförmigen Teilen, die jeweils in Längsrichtung der Bauteile ausgerichtet sind. Somit überschreitet die im Vorliegenden relevante Offenbarung nicht jene von AT 505 737 B1.
Aus FR 1 518 263 A ist ein balkenförmiger Bauteil bekannt, der aus zwei mit Hilfe von zwei Kupplungsstäben miteinander verbundenen Profilstäben besteht. Die Kupplungsstäbe sind ähnlich ausgebildet wie die Verbindungselemente der WO 2014/153574 A1. Die Ausbildung der Profilstäbe einerseits und die Ausbildung der Kupplungsstäbe der FR 1 518 263 A anderseits erlauben es nicht, beispielsweise plattenförmige Bauteile beim Verbinden aufeinander zu zu bewegen.

DE 93 12 052 U offenbart einen einstückigen Kupplungsstab zum Verbinden von auf Gehrung zusammenzufügenden Platten. Die aus DE 93 12 052 U bekannte Verbindung von Platten hat die gleichen Eigenschaften wie die Verbindung der EP 0 886 016 A1 und erlaubt es nicht die Platten beim Verbinden aufeinander zu zu bewegen. Vielmehr müssen die Platten beim Verbinden bereits aneinander anliegend angeordnet sein.

Decken und ähnliche Bauelemente, die aus vorgefertigten Bauteilen in Form von plattenförmigen Deckenelementen bestehen und meist erst auf einer Baustelle zusammengefügt werden, weisen häufig Eigenspannungen auf und sind nicht gerade.

Oft haben die aneinander anzulegenden und miteinander zu verbindenden Flächen der Bauteile eine gekrümmte oder in sich verwundene Form.

Das Zusammenspannen dieser Bauteile zu einem spaltfreien Bauelement ist zeitaufwändig und erfordert mechanische Spannvorrichtungen. Beim Zusammenspannen der Bauteile werden diese mit Schrauben, meist Holzgewindeschrauben, über ein in einen Stufenfalz verlegtes Deckbrett miteinander verschraubt.

Diese Verbindungsart hat den Nachteil, dass die miteinander zu verbindenden Bauteile durch das Deckbrett mit Hilfe der Schrauben nur in ihrem obersten Bereich gehalten werden und sich die Bauelemente nach innen öffnen können, indem dort wieder ein Spalt gebildet wird.

Dies ist nachteilig, da immer mehr Holzdecken und sonstige Bauelemente als Sichtdecken oder Sichtbauelemente verwendet werden, bei welchen Spalte als störend empfunden werden.

Der Erfindung liegt die Aufgabe zugrunde, ein aus Bauteilen bestehendes Bauelement vorzustellen, bei dem Spalte zwischen den Bauteilen vermieden sind und keine Gefahr besteht, dass sich zwischen den aneinander liegenden Bauteilen ein Spalt bildet. Gelöst wird diese Aufgabe erfindungsgemäß mit einem Bauelement, das die Merkmale von Anspruch 1 aufweist, und mit einem Verfahren, das die Merkmale von Anspruch 12 aufweist.

Bevorzugte und vorteilhafte Ausgestaltungen der Erfindung sind Gegenstand der Unteransprüche.

Da bei dem erfindungsgemäßen Bauelement die wenigstens zwei Bauteile miteinander über Verbindungselemente verbunden sind, die in der Lage sind, die Bauteile aufeinander vorzuspannen, gelingt es, die Bauteile, auch wenn sie verzogen (gekrümmt oder gebogen) sind und Eigenspannungen aufweisen, so miteinander zu verbinden, dass die einander zugekehrten Flächen der Bauteile über die gesamte Länge des Bauelementes dicht, also spaltfrei, aneinander anliegen.

Insbesondere, wenn die Bauteile des erfindungsgemäßen Bauelementes plattenförmige Deckenelemente sind, erlaubt es die Verwendung erfindungsgemäßer Verbindungselemente, die Deckenelemente, die zunächst mit Abstand voneinander nebeneinander liegen, einander soweit anzunähern, dass ihre Schmalflächen im Wesentlichen spaltfrei aneinander anliegen. Dies ohne, dass gesonderte Spannvorrichtungen verwendet werden müssen.

Die erfindungsgemäß verwendeten Verbindungselemente sind Verbindungselemente, die in hinterschnitten ausgebildete Ausnehmungen in den einander zugekehrten Flächen der Bauteile eingreifen, wobei die Verbindungselemente sich verbreiternde Rippen aufweisen, die in die Ausnehmungen eingreifen.

Im Rahmen der Erfindung bestehen die Verbindungselemente, so wie dies im Prinzip aus WO 2014/153574 A1 bekannt ist, aus zwei Teilen, die keilförmig sind und gegengleich in die Ausnehmungen eingesetzt werden.

Die im Rahmen der Erfindung bevorzugt verwendeten Bauteile sind flächige oder längliche Bauteile, beispielsweise in Form von Platten, Brettern oder Pfosten, die über Schmalflächen aneinander anliegen. Dabei können in den Schmalflächen längslaufende Nuten und Federn vorgesehen sein, wobei auch Fremdfedern in Betracht gezogen sind.

Die hinterschnitten ausgebildeten Ausnehmungen in den Bauteilen erstrecken sich bei der Erfindung quer (senkrecht) zur Flächenerstreckung der Bauteile.

Die hinterschnitten ausgebildeten Ausnehmungen sind zu den Schmalflächen der Bauteile, über welche diese an einem angrenzenden Bauteil anliegen sollen, hin offen. Dies bedeutet mit anderen Worten, dass die Ausnehmungen zur Längserstreckung der Schmalflächen der Bauteile, über welche diese aneinander anliegen, quer (senkrecht) ausgerichtet sind. Die Mündungen der Ausnehmungen liegen in den im Bauelement aneinander anliegenden Schmalflächen der Bauteile.

Erfindungsgemäß haben die Verbindungselemente, die aus zwei keilförmig ausgebildeten Teilen bestehen, eine Länge, die im Wesentlichen der Dicke der Bauteile entspricht.

Im Rahmen der Erfindung ist vorgesehen, dass über die Länge der Schmalflächen, mit welchen die Bauteile des Bauelementes aneinander anliegen, mehrere Verbindungselemente vorgesehen sind. Insbesondere ist dabei in Betracht gezogen, dass die Verbindungselemente voneinander gleich große Abstände aufweisen. Im Rahmen der Erfindung ist beispielsweise in Betracht gezogen, dass jeweils ein Verbindungselement im Bereich der Enden der Schmalflächen, über welche die Bauteile des Bauelementes, wenn die Verbindungselemente in ihrer Wirkstellung sind, aneinander anliegen, vorgesehen ist.

Dank der erfindungsgemäßen Ausbildung des Bauelementes einerseits und des erfindungsgemäßen Verfahrens anderseits ist es wirksam möglich, die Bauteile zusammenzuspannen und einen Spalt dauerhaft zu überwinden. Dies gilt auch, wenn in den Schmalflächen der Bauteile Federn und Nuten vorgesehen sind, damit die Bauteile miteinander bündig ausgerichtet sind.

In einer Ausführungsform der Erfindung kann vorgesehen sein, dass in wenigstens einem Teil der Verbindungselemente eine Verankerung vorgesehen ist, an der ein Werkzeug zum Herausziehen des Teils angesetzt werden kann. Das erleichtert das Lösen der Verbindung von Bauteilen voneinander. Die Verankerung kann in Form von Muffen aus Metall mit außen vorgesehenem (Holz-)Gewinde und innen vorgesehenem Gewinde, in das ein Werkzeug eingeschraubt werden kann, ausgebildet sein. Beispielsweise sind die Muffen sogenannte "RAMPA"-Muffen.

Weitere Einzelheiten und Merkmale der Erfindung ergeben sich aus der nachstehenden Beschreibung eines bevorzugten Ausführungsbeispiels anhand der Zeichnung. Es zeigt
- Fig. 1: zwei flächige, nebeneinander angeordnete Bauteile eines erfindungsgemäßen Bauelementes,
- Fig. 2: in Schrägansicht einen Teil des Bauelementes aus Fig. 1 mit eingesetzten Verbindungselementen,
- Fig. 3: einen Teil des Bauelementes von Fig. 1 in Draufsicht mit eingesetztem, aber noch nicht in Wirkstellung befindlichem Verbindungselement,
- Fig. 4: den Teil des Bauelementes von Fig. 3 mit in Wirkstellung befindlichem Verbindungselement,
- Fig. 5: außen noch nicht miteinander verbundene Bauteile eines Bauelementes, die gekrümmt sind,
- Fig. 6: eine Einzelheit von Fig. 5 mit eingesetzten Verbindungselementen in Schrägansicht,
- Fig. 7: teilweise die Bauteile des Bauelementes von Fig. 5 mit eingesetztem, noch nicht in Wirkstellung befindlichem Verbindungselement,
- Fig. 8: die Bauteile des Bauelementes von Fig. 5 mit in Wirkstellung befindlichem Verbindungselement,
- Fig. 9: einen Teil des Bauelementes in einer Ansicht ähnlich Fig. 6 mit in Wirkstellung befindlichen Verbindungselementen,
- Fig. 10 bis 15: die Abfolge von Schritten beim Verbinden von Bauteilen zu einem Bauelement,
- Fig. 16: in Draufsicht ein Verbindungselement,
- Fig. 17: in Ansicht von unten der Fig. 16 das Verbindungselement aus Fig. 16 und
- Fig. 18: in Ansicht von links der Fig. 16 das Verbindungselement aus Fig. 16.

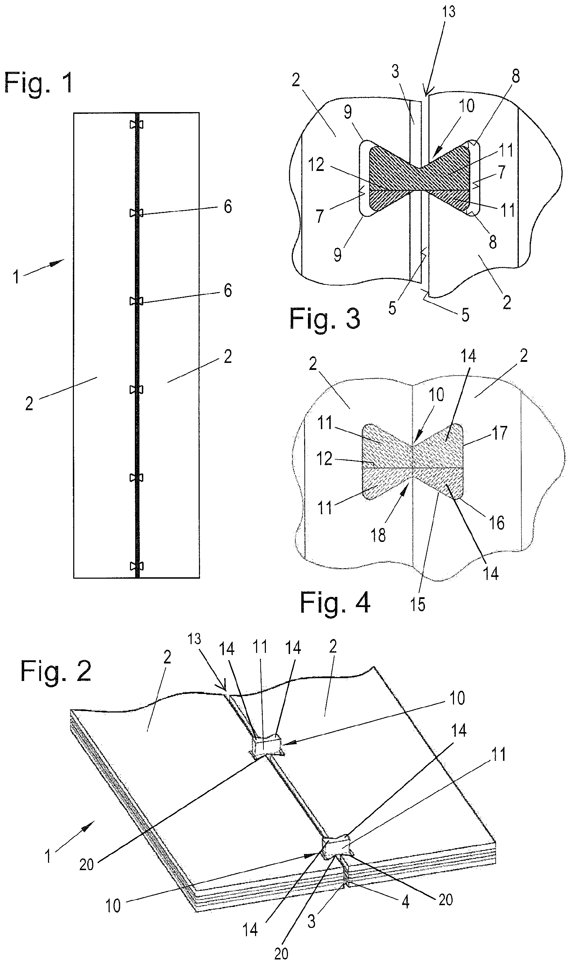

Ein in Fig. 1 schematisch dargestelltes (noch nicht fertiggestelltes) Bauelement 1, das beispielsweise ein Bauelement für eine Decke ist, umfasst zwei Bauteile 2 (Deckenelemente), die einander über ihre Schmalflächen 5 zugekehrt sind. In den Schmalflächen 5 ist in einem Bauteil 2 eine Nut 4 und im anderen Bauteil 2 eine Feder 3 vorgesehen (Fig. 2). Die Feder 3 kann eine Eigenfeder oder eine Fremdfeder sein.

In den Bauteilen 2 sind im Bereich der Schmalflächen 5 Ausnehmungen 6 vorgesehen, die hinterschnitten ausgebildet sind, also jeweils eine Basis 7 aufweisen, die breiter ist als die in den Schmalflächen 5 der Bauteile 2 liegenden Mündungen der Ausnehmungen 6.

Um die Bauteile 2 miteinander zu dem Bauelement 1 zu verbinden, werden in die Ausnehmungen 6 Verbindungselemente 10 eingesetzt. Jedes der Verbindungselemente 10 besteht aus zwei keilförmigen Teilen 11, die über ihre einander zugekehrten Keilflächen 12 aneinander anliegen. Die keilförmigen Teile 11 der Verbindungselemente 10 werden so aneinander gelegt, dass das dickere Ende von einem Teil 11 dem dünneren Ende des anderen Teils 11 zugeordnet ist. Die Situation ist in Fig. 3 gezeigt. In diesem Zustand der keilförmigen Teile 11 der Verbindungselemente 10 sind die Teile 11 zueinander versetzt angeordnet. Dies zeigt in Schrägansicht auch Fig. 2.

Die keilförmigen Teile 11 der Verbindungselemente 10 ergeben aneinander gelegt und zur Gänze in die Ausnehmungen 6 eingesetzt eine Außenform der Verbindungselemente 10, die der Querschnittsform der Ausnehmungen 6 in den Bauteilen 2 des Bauelementes 1 entspricht. Dies ist in Fig. 4 gezeigt, in der auch gezeigt ist, dass das Verbindungselement 10 die Ausnehmungen 6, in die es eingesetzt ist, vollständig ausfüllt.

Fig. 4 zeigt auch, dass nach dem vollständigen Hineindrücken des zunächst (Fig. 2) noch über die Großfläche der Bauteile 2 überstehenden, keilförmigen Teils 11 die Bauteile 2 aufeinander zu vorgespannt sind und in einer Stellung gehalten werden, in der ihre Schmalflächen 5 aneinander anliegen und die Feder 3 an einem Bauteil 2 in die Nut 4 im anderen Bauteil 2 eingreift.

Die Darstellungen in Fig. 1 bis 4 zeigen, dass die Ausnehmungen 6 quer zu den Großflächen der Bauteile 2 ausgerichtet sind. Dies bedeutet, dass die Ausnehmungen 6 zu den Großflächen der Bauteile 2 hin offen sind. Dabei sind die Ausnehmungen 6 so ausgebildet, dass ihre schmäler als die Basis 7 ausgebildeten Mündungen in den Schmalflächen 5 der Bauteile 2 liegen.

Die Ausnehmungen 6 haben Seitenflächen 8, die über Krümmungen 9 in die Basis 7 übergehen, wobei auch die im Bereich der Mündung liegenden Enden der Seitenflächen 8 gekrümmt ausgebildet sein können. Die Krümmungen können durch Fräsen hergestellt werden.

Fig. 4 zeigt, dass die Verbindungselemente 10, wenn sie in ihrer in Fig. 4 gezeigten Wirkstellung sind, die Ausnehmungen 6 in den Bauteilen 2 zur Gänze ausfüllen, also eine Querschnittsform und -größe aufweisen, die jenen der Ausnehmungen 6 entsprechen.

Die Verbindungselemente 10, die auch als Koppelleisten bezeichnet werden können, bestehen beispielsweise aus Sperrholz, wobei die einzelnen Lagen des Sperrholzes parallel zur Flächenerstreckung der Bauteile 2 liegen.

Die einzelnen Lagen der Teile 11 der Verbindungselemente 10 sind miteinander verleimt und können zusätzlich durch Holz- oder Metalldübel gegen Relativbewegungen gesichert sein.

Alternativ können die Verbindungselemente 10 von entsprechend der Umrissform der Verbindungselemente 10 profilierten Stangen (aus Holz) herunter geschnitten und dann in die Teile 11 geteilt werden.

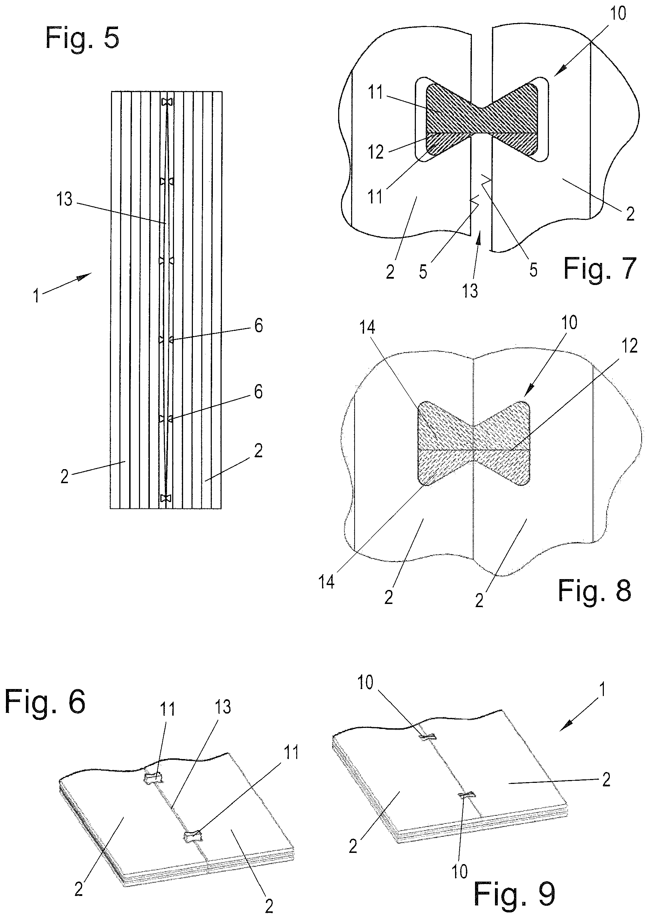

Fig. 5 zeigt zwei Bauteile 2 eines Bauelementes 1, die Eigenspannung aufweisen, also gekrümmt sind, so dass ihre Schmalflächen 5 nicht aneinander anliegen und ein Spalt 13 vorliegt.

Die Fig. 6 und 7 zeigen, wie die Teile 11 der Verbindungselemente 10 in die Ausnehmungen 6 der Bauelemente 2 eingesetzt werden, wobei zunächst ein Teil 11 noch über die Großfläche der Bauteile 2 vorsteht.

Sobald beide Teile 11 vollständig in den Ausnehmungen 6 aufgenommen sind, sind die beiden Bauteile 2 des Bauelementes 1 so aufeinander zu gezogen, dass die Krümmungen der Bauteile 2 überwunden sind und der Spalt 13 (Fig. 5, 6 und 7) zwischen den Bauteilen 2 geschlossen ist, wie dies Fig. 8 und 9 zeigen.

Insbesondere die Fig. 4 und 8 zeigen, dass die Verbindungselemente 10 sich voneinander weg verbreiternde Rippen 14 aufweisen, die von den Teilen 11 der Verbindungselemente 10 gebildet werden.

Die Rippen 14 haben Seitenflächen 15, die über gekrümmte Bereiche 16 in die Endfläche 17 der Rippen 14 übergehen.

Die Fig. 4 und 8 zeigen auch, dass die Seitenflächen 15 der Rippen 14 der Verbindungselemente 10 im mittleren Bereich ("Keiltaille 20") der Verbindungselemente 10 über gekrümmte Bereiche 18 ineinander übergehen.

In einer möglichen Ausführungsform des erfindungsgemäßen Bauelementes 1 kann dieses wie nachstehend beschrieben ausgebildet sein.

Die Keilform der beiden Teile 11 der Verbindungselemente 10 ist so gewählt, dass genug Raum für das Einfügen des zweiten Teils 11 der Verbindungselemente 10 verbleibt, wenn die beiden Bauteile 2, die beispielsweise Deckenelemente sind, mit Abstand (Spalt 13) voneinander (beispielsweise wegen der vorstehenden Feder 3) angeordnet sind und der erste keilförmige Teil 11 in eine Ausnehmung 6 der Bauteile 2 (Deckenelemente) bereits eingesetzt ist. Der erste Teil 11 wird so eingesetzt, dass sein dünneres Ende nach oben weist und die Keilfläche 12 so ausgerichtet ist, dass der zweite Teil 11 mit seinem dünneren Ende voran in die Ausnehmungen 6 der Bauteile 2 (Deckenelemente) eingesetzt werden kann. Durch Eindrücken oder Einschlagen des zweiten Teils 11 werden die Bauteile 2 (Deckenelemente) aufeinander zu bewegt und aufeinander zu vorgespannt.

Die Ausnehmungen 6 haben Seitenflächen 8, die über Krümmungen 9 in die Basis der Ausnehmungen 6 übergehen, wobei auch die im Bereich der Mündung der Ausnehmungen 6 liegenden Enden der Seitenflächen 8 gekrümmt ausgebildet sein können. Die Krümmungen 9 können durch Fräsen hergestellt werden.

Die Keilform und die Ausprägung der Teile 11 der Verbindungselemente 10 bestimmt wie groß der Spalt 13 zwischen nebeneinanderliegenden Bauteilen 2 sein kann und mit welcher Kraft die Bauteile 2 (Deckenelemente) während des Eindrückens des zweiten Teils 11 der Verbindungselemente 10 aneinander gepresst werden.

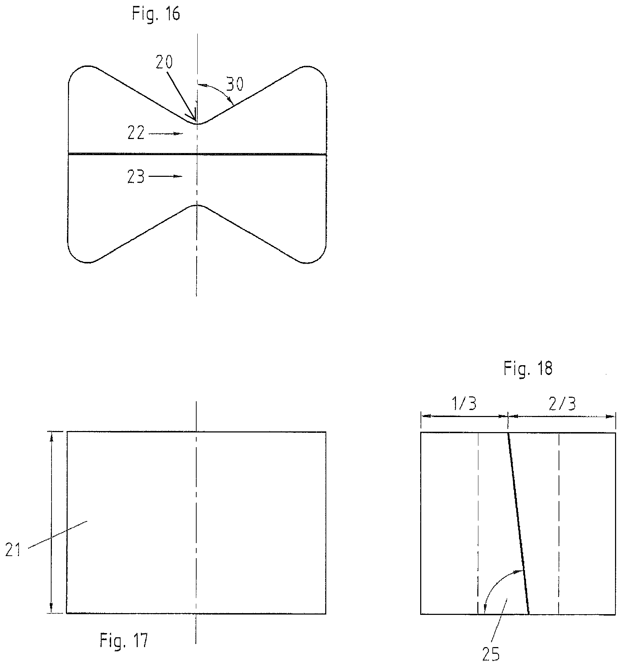

Gute Ergebnisse werden erzielt, wenn die Dicken der Teile 11 der Verbindungselemente 10 im Bereich der Keiltaille 20 (diese liegt im Bereich der Mündungen der Ausnehmungen 6) das Verhältnis von 3:1 annehmen. Mit anderen Worten ist es bevorzugt, wenn das dickere Ende einen Teils 11 im Bereich der Mündung der Ausnehmungen 6 drei Mal so dick ist wie das dünnere Ende des anderen Teils 11, wie es beispielsweise in den Fig. 16 bis 18 dargestellt ist.

Mit anderen Worten gesagt, beträgt die Stärke (Dicke) am dünneren Ende der Teile 11 ein Viertel und die Stärke (Dicke) am dickeren Ende der Teile 11 drei Viertel der Stärke (Dicke) der gesamten Keiltaille 20.

Abweichungen des genannten Verhältnisses der Dicken der Teile 11 sind möglich (+/- 15 % oder 11/16 bis 13/16 der Keiltaille 20 für das dickere Ende, sowie 3/16 bis 5/16 der Keiltaille 20 für das dünnere Ende).

Vorteilhaft ist, wenn sich aufgrund des Verhältnisses von 3:1 im Bereich der Keiltaille 20 und einer Keilhöhe 21 (Länge des Verbindungselementes 10, vgl. Fig. 17) ein Keilwinkel 25 (Fig. 18), also der Winkel, den die Keilflächen 12 mit den Endflächen der Verbindungselemente 10 einschließen, im Bereich von 85 bis 72° ergibt, wobei der Bereich von 81 bis 77° bevorzugt ist.

Die Keilhöhe 21, also die Länge der Verbindungselemente 10, beträgt beispielsweise 40 bis 400 mm, wobei die Dicke der Bauteile 2 des Bauelementes 1 bis zu 500 mm betragen kann.

Der Winkel den die Seitenflächen 8 der hinterschnitten ausbildeten Ausnehmungen 6 miteinander einschließen, bestimmt den beim Verbinden der Bauteile 2 (Deckenelemente) zu einem Bauteil 1 zulässigen Maximalabstand (Spalt 13) und die Größe der auf die Bauteile 2 (Deckenelemente) einwirkenden und diese aufeinander zu belastenden Kräfte beim Eindrücken des zweiten Teils 11 der Verbindungselemente 10. Auf die Verbindungselemente 10 bezogen, entspricht dieser Winkel dem Ausmaß der Zunahme der Dicke der Rippen 14, also der Ausprägung der Schwalbenschwanzform der Rippen 14 der Teile 11 der Verbindungselemente 10 (symbolisiert durch den Winkel 30 in Fig. 16) .

Die Ausprägung der Schwalbenschwanzform der Rippen 14 der Verbindungselemente 10, die durch den Winkel 30 (Fig. 16) bestimmt ist, ist mit Rücksicht auf die jeweils gegebenen Verhältnisse zu wählen. Ein zu kleiner oder ein zu großer Winkel zwischen den Seitenflächen 8 der Ausnehmungen 6 wirkt sich in bestimmten Fällen nachteilig auf den größtmöglichen Abstand (Spalt 13) zwischen den Bauteilen 2 und die auf die Bauteile 2 einwirkenden Kräfte aus. Gute Verhältnisse ergeben sich, wenn der Winkel, den die Seitenflächen 8 der Ausnehmungen 6 und die Seitenflächen der Rippen 14 der Verbindungselemente 10 miteinander einschließen, etwa 50 bis 70°, vorzugsweise 60°, beträgt.

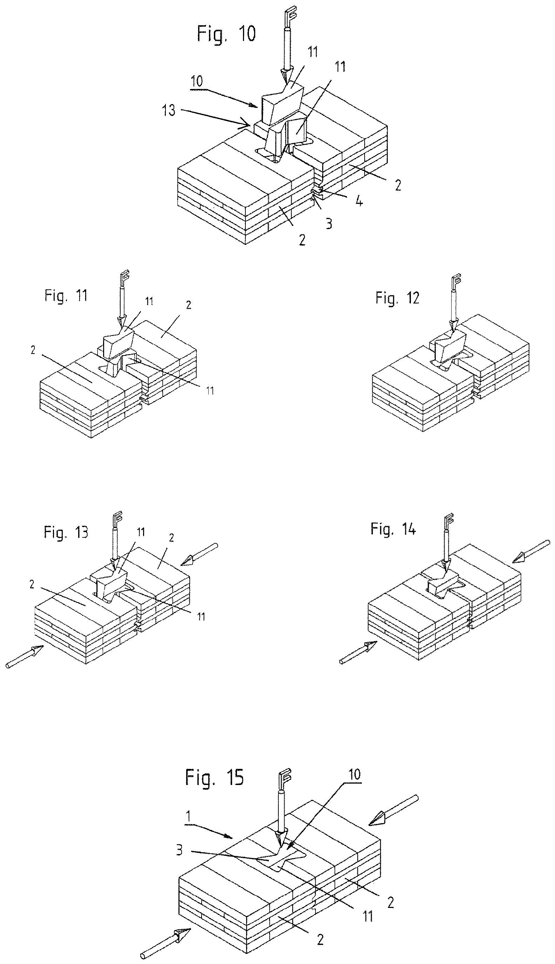

Unter Bezugnahme auf die angeschlossenen Figuren 10 bis 15 wird beispielhaft beschrieben, wie ein erfindungsgemäßes Bauelement 1, das wenigstens zwei Bauteile 2 umfasst, hergestellt werden kann, indem die Bauteile 2 miteinander verbunden werden, wobei ein erfindungsgemäßes Bauelement 1 aus Deckenelementen als Bauteile 2 hergestellt wird.

In Fig. 10 ist gezeigt, wie Bauteile 2 in Form von zwei Deckenelementen mit Abstand (Spalt 13) voneinander nebeneinanderliegend angeordnet sind, wobei an der Schmalfläche 5 eines Bauteiles 2 (Deckenelement) eine Rippe 3 und in der Schmalfläche 5 des anderen Bauteils 2 eine Nut 4 vorgesehen ist. Aus der Folge von Darstellungen der Fig. 11 und 12 ist ersichtlich, dass zunächst ein Teil 11 der Verbindungselemente 10 in die Ausnehmungen 6 der Bauteile 2 (Deckenelemente) eingesetzt wird. Sobald die Situation von Fig. 12 erreicht ist, wird auch der zweite Teil 11 des Verbindungselementes 10 in die Ausnehmungen 6 eingeschoben (Fig. 13), wobei dieser Teil 11 mit seinem dünneren Ende voran in die Ausnehmungen 6 der Bauteile 2 eingeschoben und in Richtung des Pfeils F hineingedrückt wird. Dies ist möglich, weil der erste Teil 11 des Verbindungselementes 10 so eingesetzt worden ist, dass sein dünneres Ende nach oben weist, sodass genügend Raum für das Einfügen des zweiten Teil 11 des Verbindungselementes 10 mit seinem dünneren Ende voran verbleibt. Durch zunehmendes Hineindrücken des zweiten Teils 11 des Verbindungselementes 10 (Fig. 13 und 14) werden die Bauteile 2 (Deckenelemente) aneinander angenähert, bis sie schließlich, wie aus Fig. 15 ersichtlich, miteinander fugenlos zu dem Bauelement 1 verbunden sind.

Diese Art der Verbindung von Deckenelementen ist gegenüber dem Stand der Technik vorteilhaft, weil die bisher zum Zusammenziehen von (liegenden) Deckenelementen verwendeten, an den Deckenelementen anzusetzenden Spannvorrichtungen (sogenannte Plattenzüge) entbehrlich sind.

Zusammenfassend kann ein Ausführungsbeispiel des erfindungsgemäßen Bauelementes 1 wie folgt beschrieben werden:
Ein Bauelement 1, das aus wenigstens zwei Bauteilen 2, die über ihre Schmalflächen 5 aneinander anliegen, besteht, umfasst mehrere Verbindungselemente 10, welche die Bauteile 2 des Bauelementes 1 aufeinander zu vorspannen. Die Verbindungselemente 10 sind in hinterschnitten ausgebildeten Ausnehmungen 6 der Bauteile 2 aufgenommen. Die Ausnehmungen 6 in den Bauteilen 2 sind quer zur Längserstreckung der Schmalflächen 5 der Bauteile 2 ausgerichtet, wobei die Mündungen der Ausnehmungen 6 zu den Schmalflächen 5 der Bauteile 2 hin offen sind. Jedes Verbindungselement 10 besteht aus zwei keilförmigen Teilen 11, die gegengleich angeordnet sind. Bei vollständig in den Ausnehmungen 6 aufgenommenen Teilen 11 der Verbindungselemente 10 füllen die Rippen 14 der Verbindungselemente 10 die Ausnehmungen 6 in den Bauteilen 2 vollständig aus, so dass die Bauteile 2 aufeinander zu vorgespannt sind und verhindert ist, dass sich zwischen Bauteilen 2 ein Spalt 13 bildet, oder erreicht wird, dass ein vorher vorliegender Spalt 13 geschlossen wird.

## Patentansprüche

1. Bauelement (1), umfassend wenigstens zwei Bauteile (2), die entlang einander zugekehrter Flächen (5) aneinander anliegen, und wenigstens ein Verbindungselement (10), wobei die Bauteile (2) je wenigstens eine hinterschnitten ausgebildete Ausnehmung (6) mit Seitenflächen (8) und mit einer zu den einander zugekehrten Flächen (5) der Bauteile (2) hin offenen Mündung, die in den im Bauelement (1) aneinander anliegenden Flächen (5) der Bauteile (2) liegen, aufweisen, wobei die Ausnehmungen (6) quer zu der Flächenerstreckung der Bauteile (2) ausgerichtet sind, wobei die Ausnehmungen (6) im Bereich ihrer Mündungen schmäler ausgebildet sind als im Bereich ihrer von den Mündungen entfernt liegenden Basis (7) und wobei das wenigstens eine Verbindungselement (10) Rippen (14) aufweist, welche die gleiche Querschnittsform aufweisen wie die Ausnehmungen (6) in den Bauteilen (2), **dadurch gekennzeichnet, dass** das wenigstens eine Verbindungselement (10) aus zwei keilförmigen Teilen (11) mit Keilflächen (12) besteht, wobei die Teile (11) aneinander gelegt die Ausnehmungen (6) zur Gänze ausfüllen, wobei die Keilflächen (12) des Verbindungselementes (10) quer zu den einander zugekehrten Flächen (5) der Bauteile (2) ausgerichtet sind, dass das Verbindungselement (10), das aus den zwei keilförmigen Teilen (11) besteht, eine Länge hat, die im Wesentlichen der Dicke der Bauteile (2) entspricht, und wobei über die Länge der Flächen (5), mit welchen die Bauteile (2) des Bauelementes (1) aneinander anliegen, mehrere Verbindungselemente (10) vorgesehen sind.

2. Bauelement nach Anspruch 1, **dadurch gekennzeichnet, dass** die Basis (7) der Ausnehmungen (6) über Krümmungen (9) in die Seitenflächen (8) der Ausnehmungen (6) übergeht.

3. Bauelement nach Anspruch 2, **dadurch gekennzeichnet, dass** die Krümmungen (9) runde Fräsungen sind.

4. Bauelement nach einem der Ansprüche 1 bis 3, **dadurch gekennzeichnet, dass** die Seitenflächen (8) im Bereich der Mündungen der Ausnehmungen (6) über Krümmungen in die einander zugekehrten Flächen (5) der Bauteile (2) übergehen.

5. Bauelement nach einem der Ansprüche 1 bis 4, **dadurch gekennzeichnet, dass** die Ausnehmungen (6) trapezförmig hinterschnitten ausgebildet sind.

6. Bauelement nach einem der Ansprüche 1 bis 5, **dadurch gekennzeichnet, dass** die Seitenflächen (8) der Ausnehmungen (6) miteinander einen Winkel von 50 bis 70°, vorzugsweise von 60°, einschließen.

7. Bauelement nach einem der Ansprüche 1 bis 6, **dadurch gekennzeichnet, dass** die Verbindungselemente (10) aus verleimten Sperrholzlagen, Leichtmetall, Spritzgut, Kunststoff oder einem Verbundwerkstoff besteht.

8. Bauelement nach einem der Ansprüche 1 bis 7, **dadurch gekennzeichnet, dass** die Verbindungselemente (10) durch Holz- oder Metalldübel gegen Bewegungen relativ zu den Bauteilen (2) gesichert ist.

9. Bauelement nach einem der Ansprüche 1 bis 8, **dadurch gekennzeichnet, dass** die Keilflächen (12) der Verbindungselemente (10) zur Ebene der Bauteile (2) einen Winkel (25) von 72 bis 85°, vorzugsweise 77 bis 81°, einnehmen.

10. Bauelement nach einem der Ansprüche 1 bis 9, **dadurch gekennzeichnet, dass** das Verhältnis der Dicken (22, 23) der Teile (11) der Verbindungselemente (10) im Bereich der Mündung (20) im Wesentlichen 3:1 beträgt.

11. Bauelement nach einem der Ansprüche 1 bis 10, **dadurch gekennzeichnet, dass** die Dicke der Bauteile (2) bis zu 500 mm beträgt.

12. Verfahren zum Herstellen eines Bauelementes (1) nach einem der Ansprüche 1 bis 11, **dadurch gekennzeichnet, dass** die Bauteile (2) mit aufeinanderzu weisenden Schmalflächen (5) und mit Abstand voneinander nebeneinander angeordnet werden, dass ein erster keilförmiger Teil (11) der Verbindungselemente (10) mit seinem dickeren Ende voran in nebeneinander angeordnete Ausnehmungen (6) der Bauteile (2) eingeführt wird, dass der zweite keilförmige Teil (11) der Verbindungselemente (10) mit seinem dünneren Ende voran in die Ausnehmungen (6) eingeführt und in die Ausnehmungen (6) hineingedrückt wird, bis die Schmalflächen (5) der Bauteile (2) spaltfrei aneinander anliegen, die Teile (11) der Verbindungselemente (10) vollständig in den Ausnehmungen (8) aufgenommen sind und die Rippen (14) der Teile (11) die Ausnehmungen (8) vollständig ausfüllen.

## Claims

1. Component (1), comprising at least two component parts (2) which abut one another along mutually facing surfaces (5), and at least one connecting element (10), wherein the component parts (2) each have at least one recess (6) formed as an undercut and having side surfaces (8) and an opening which is open towards the mutually facing surfaces (5) of the component parts (2), wherein the openings lie in the surfaces (5) of the component parts (2) abutting one another in the component (1), wherein the recesses (6) are aligned transversely to the surface extension of the component parts (2), wherein the recesses (6) are formed narrower in the region of their openings than in the region of their base (7) remote from the openings, and wherein the at least one connecting element (10) has ribs (14), which have the same cross-sectional shape as the recesses (6) in the component parts (2), wherein the at least one connecting element (10) consists of two wedge-shaped parts (11) with wedge surfaces (12), wherein the parts (11) laid against one another fill the recesses (6) completely, wherein the wedge surfaces (12) of the connecting element (10) are aligned transversely to the mutually facing surfaces (5) of the component parts (2), and over the length of the surfaces (5) with which the component parts (2) of the component (1) abut one another, a plurality of connecting elements (10) are provided in each case, **characterized in that** the connecting element (10), which consists of the two wedge-shaped parts (11), has a length which corresponds essentially to the thickness of the component parts (2).

2. Component according to claim 1, **characterized in that** the base (7) of the recesses (6) converges via curvatures (9) into the side surfaces (8) of the recesses (6).

3. Component according to claim 2, **characterized in that** the curvatures (9) are round milled grooves.

4. Component according to one of claims 1 to 3, **characterized in that** the side surfaces (8) converge in the region of the openings of the recesses (6) via curvatures into the mutually facing surfaces (5) of the component parts (2).

5. Component according to one of claims 1 to 4, **characterized in that** the recesses (6) are formed in a trapezoidal undercut manner.

6. Component according to one of claims 1 to 5, **characterized in that** the side surfaces (8) of the recesses (6) enclose an angle of 50 to 70°, preferably of 60°, with one another.

7. Component according to one of claims 1 to 6, **characterized in that** the connecting elements (10) consist of glued plywood layers, light metal, injection material, plastic or a composite material.

8. Component according to one of claims 1 to 7, **characterized in that** the connecting elements (10) are secured against movement relative to the component parts (2) by wooden or metal dowels.

9. Component according to one of claims 1 to 8, **characterized in that** the wedge surfaces (12) of the connecting elements (10) assume an angle (25) of 72 to 85°, preferably 77 to 81°, to the plane of the component parts (2).

10. Component according to one of the claims 1 to 9, **characterized in that** the ratio of the thicknesses (22, 23) of the parts (11) of the connecting elements (10) in the region of the opening (20) is essentially 3:1.

11. Component according to one of claims 1 to 10, **characterized in that** the thickness of the component parts (2) is up to 500 mm.

12. Method for producing a component (1) according to one of claims 1 to 11, **characterized in that** the component parts (2) are arranged next to one another with narrow surfaces (5) facing one another and at a distance from one another, **in that** a first wedge-shaped part (11) of the connecting elements (10) is introduced with its thicker end first into recesses (6) of the component parts (2) arranged next to one another, **in that** the second wedge-shaped part (11) of the connecting elements (10) is introduced with its thinner end first into the recesses (6) and pressed into the recesses (6) until the narrow surfaces (5) of the component parts (2) abut one another without a gap, the parts (11) of the connecting elements (10) are completely accommodated in the recesses (8) and the ribs (14) of the parts (11) completely fill the recesses (8).

## Revendications

1. Élément de construction (1), comprenant au moins deux pièces (2) qui reposent l'une sur l'autre le long de surfaces (5) tournées l'une vers l'autre et au moins un élément d'assemblage (10), les pièces (2) présentant chacune au moins un évidement (6) en contre-dépouille avec des surfaces latérales (8) et avec une embouchure ouverte vers les surfaces (5) des pièces (2) tournées l'une vers l'autre, les embouchures se trouvant dans les surfaces (5) des pièces (2) qui reposent l'une sur l'autre dans l'élément de construction (1), les évidements (6) étant orientés transversalement par rapport à l'étendue de la surface des pièces (2), les évidements (6) étant plus étroits au niveau de leurs embouchures qu'au niveau de leur base (7) éloignée des embouchures et l'au moins un élément d'assemblage (10) présentant des nervures (14) qui ont la même forme en section que les évidements (6) des pièces (2), dans lequel l'au moins un élément d'assemblage (10) se compose de deux parties en forme de coin (11) avec des surfaces de coin (12), dans lequel les parties (11) posées l'une sur l'autre remplissent complètement les évidements (6), dans lequel les surfaces de coin (12) de l'élément d'assemblage (10) sont orientées transversalement par rapport aux surfaces (5) des pièces (2) tournées l'une vers l'autre et dans lequel plusieurs éléments d'assemblage (10) sont prévus sur la longueur de chacune des surfaces (5) par lesquelles les pièces (2) de l'élément de construction (1) reposent l'une sur l'autre, **caractérisé en ce que** l'élément d'assemblage (10), qui se compose de deux parties en forme de coin (11), a une longueur qui correspond sensiblement à l'épaisseur des pièces (2).

2. Élément de construction selon la revendication 1, **caractérisé en ce que** la base (7) des évidements (6) est reliée aux surfaces latérales (8) des évidements (6) avec des courbures (9) de transition.

3. Élément de construction selon la revendication 2, **caractérisé en ce que** les courbures (9) sont des fraisages en rond.

4. Élément de construction selon l'une des revendications 1 à 3, **caractérisé en ce que** les surfaces latérales (8) sont reliées aux surfaces (5) des pièces (2) tournées l'une vers l'autre au niveau des embouchures des évidements (6) avec des courbures de transition.

5. Élément de construction selon l'une des revendications 1 à 4, **caractérisé en ce que** les évidements (6) présentent une contre-dépouille trapézoïdale.

6. Élément de construction selon l'une des revendications 1 à 5, **caractérisé en ce que** les surfaces latérales (8) des évidements (6) forment ensemble un angle de 50° à 70°, de préférence de 60°.

7. Élément de construction selon l'une des revendications 1 à 6, **caractérisé en ce que** les éléments d'assemblage (10) se composent de couches de contreplaqué collées, de métal léger, de matière moulée par injection, de plastique ou d'un matériau composite.

8. Élément de construction selon l'une des revendications 1 à 7, **caractérisé en ce que** les éléments d'assemblage (10) sont fixés par des goujons en bois ou en métal empêchant leurs mouvements relatifs par rapport aux pièces (2).

9. Élément de construction selon l'une des revendications 1 à 8, **caractérisé en ce que** les surfaces de coin (12) des éléments d'assemblage (10) forment par rapport au plan des pièces (2) un angle (25) de 72° à 85°, de préférence de 77° à 81°.

10. Élément de construction selon l'une des revendications 1 à 9, **caractérisé en ce que** le rapport entre les épaisseurs (22, 23) des parties (11) des éléments d'assemblage (10) au niveau de l'embouchure (20) est sensiblement de 3 pour 1.

11. Élément de construction selon l'une des revendications 1 à 10, **caractérisé en ce que** l'épaisseur des pièces (2) mesure jusqu'à 500 mm.

12. Procédé pour la fabrication d'un élément de construction (1) selon l'une des revendications 1 à 11, **caractérisé en ce que** les pièces (2) sont disposées les unes à côté des autres avec des surfaces étroites (5) tournées l'une vers l'autre et à distance les uns des autres, **en ce qu'**une première partie en forme de coin (11) des éléments d'assemblage (10) est insérée avec son extrémité épaisse en avant dans des évidements (6) des pièces (2) disposées les unes à côté des autres, **en ce que** la deuxième partie en forme de coin (11) des éléments d'assemblage (10) est insérée avec son extrémité fine en avant dans les évidements (6) et enfoncée dans les évidements (6) jusqu'à ce que les surfaces étroites (5) des pièces (2) reposent l'une sur l'autre sans jeu, que les parties (11) des éléments d'assemblage (10) soient complètement logées dans les évidements (8) et que les nervures (14) des parties (11) remplissent complètement les évidements (8).
